# EUROPEAN PATENT APPLICATION

(11) **EP 2 067 556 A2**
(43) Date of publication of application: **10.06.2009**
(21) Application number: 08170819.0
(22) Date of filing: 05.12.2008
(51) Int. Cl.: B23C 5/26, B23B 31/02, B23B 31/19, B27B 5/32, B24B 45/00

(54) **Tool-holder device**

(30) Priority: 05.12.2007 IT UD20070231
(71) Applicant: Metal World SpA, 33050 Pavia di Udine (UD) (IT)
(72) Inventor: Paviotti, Franco, 33050 Trivignano Udinese (UD) (IT); Caisutti, Andrea, 33050 Pavia di Udine (UD) (IT)
(74) Representative: Petraz, Gilberto Luigi

(57) **Abstract**

Tool-holder device (10) to couple a tool (11) to a shaft (19) of a motor, comprising a main body (12, 112) defining a support plane (P) on which the tool (11) is able to be positioned, and a plurality of clamping means (20, 40) which attach the tool (11) to the main body (12, 112), which comprises a plurality of elastic adjustment means (32) distributed in a substantially equidistant manner on its circumference, and able to be actuated radially in a direction substantially orthogonal to an axis of rotation (30) of the shaft (19).

## Description

### FIELD OF THE INVENTION

The present invention concerns a tool-holder device suitable to couple a circular type tool to the shaft of a motor able to make it rotate, according to the pre-amble to claim 1, as known for example from EP-B-0.592.694.

The tool-holder device according to the invention is applied particularly, but not exclusively, to tools used in working wood or plastic materials, such as for example circular toothed milling cutters or suchlike.

### BACKGROUND OF THE INVENTION

Circular type tools are known, usually consisting of a disk having work elements on its periphery, for example teeth, serrations or suchlike, and axially a hole for insertion on a support element that couples them with the shaft of the motor that makes them rotate.

In tools of this type, in order to obtain a correct functioning it is extremely important to ensure that the position of the work plane is exactly orthogonal with respect to its axis of rotation, and that the axis of rotation of the tool coincides coaxially with the axis of rotation of the drive shaft.

In fact, if the tool works on a plane not orthogonal to the axis of rotation, or rotates on an axis that is eccentric to its axis of rotation, the wear will be different from one zone to another. Consequently, the duration of the tool in correct conditions of use is considerably reduced, and therefore much more frequent interventions of repair or replacement are required. Furthermore, the action of the tool on the piece to be worked is less effective and uniform, causing a low quality work.

It is known to provide tool-holder devices suitable to perform adjustment operations, in order to ensure a correct and constant positioning on a plane orthogonal to the axis of rotation. Known solutions provide to use a plurality of adjustment screws disposed parallel or orthogonal to the axis of rotation of the tool, which are suitable to act on the coupling of the tool-tool-holder device.

Although these solutions guarantee a high level of adjustment of the orthogonal position of the tool with respect to the axis of rotation of the tool-holder device, they are not able to guarantee the correct concentric positioning of the tool with respect to the drive shaft.

This positioning is normally entrusted to tight coupling tolerances provided between the tool and the device, and between the device and the drive shaft.

The known solution does not however allow to obviate possible errors in working, since it may permit an eccentric rotation of the tool. This entails lack of uniformity in the distribution of the rotating masses, with consequent shearing forces on the drive shaft.

Possible losses in the original coupling tolerances can also be caused over time by wear due to use, which also cause a poor repeatability of the positioning over time, even using the same tool.

Therefore, considering that these tools are subject to even very intense stresses, in consideration of their very high speeds of rotation during use, up to more than 6000 rpm, pitchings may occur, and variations in position and oscillations, which have a negative influence on the work done, or the constant repeatability of the work.

Furthermore, with the known solution, it is possible that, due to the effect of the non-simultaneous closure of the adjustment screws, the tool is taken into contact with the relative support plane of the tool-holder device, when it is in a slightly inclined condition.

This erroneous positioning can distort the adjustment of the position made, and can lead to the tool becoming jammed on the relative positioning hub provided on the tool-holder device.

One purpose of the present invention is to achieve a tool-holder device which allows to perform easy and rapid adjustment operations both on the work plane of the tool with respect to the drive shaft, and also the concentric position of the axis of rotation of the tool with the axis of rotation of the drive shaft.

Another purpose of the present invention is to achieve a tool-holder device that allows to perform a repeatability over time of the positioning of the tool.

Another purpose is to achieve a tool-holder device that reduces to a minimum the risk of an inclined positioning of the tool on the tool-holder device itself.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a tool-holder device according to the present invention comprises a main body of the flange type, having an axial hole able to couple with the rotation shaft of the machine on which the tool is to be mounted.

The main body defines a support plane on which the circular tool, for example a toothed milling cutter or other similar or comparable tool, is keyed and clamped, by clamping means.

According to a variant, between the main body and the tool there is an annular support element, attached to the main body by means of clamping screws and to which, in turn, the tool is attached by means of the clamping means.

In another form of embodiment, the tool-holder device also comprises a plurality of cuneiform adjustment means, distributed on the circumference of the main body. The cuneiform means are able to be displaced radially so as to act on a mating inclined surface of a relative seat made on the main body, in a direction slightly inclined with respect to the orthogonal to the axis of rotation. The cuneiform means are associated with adjustment means accessible from the outside, and allow to perform adjustment and fine balancing operations of the position of the support plane on which the tool is clamped, with respect to its axis of rotation.

In particular, by acting on the adjustment means of at least one of the cuneiform means, a corresponding portion of the surface of the annular support element is acted upon, thus modifying, also micrometrically, the position of the support plane of the tool with respect to the axis of rotation.

According to a characteristic feature of the present invention, the main body of the tool-holder device comprises a plurality of elastic adjustment means distributed on the circumference of the main body, substantially equidistant from each other, and advantageously alternated with the cuneiform adjustment means.

The elastic adjustment means are able to be actuated radially in a direction substantially orthogonal with respect to the axis of rotation of the rotation shaft.

According to a variant, the elastic adjustment means comprise relative thrust means, for example screws, accessible from the outside, which act on a coordinated, elastically yielding surface made on the main body.

In this way, it is possible to perform adjustment and fine centering operations on the position of the axis of rotation of the tool with respect to the axis of rotation of the rotation shaft.

Thanks to the presence of the elastic adjustment means, it is possible to perform the desired centering adjustments of the axis of rotation of the tool, irrespective of the accuracy of the coupling tolerance between the tool-holder device and the rotation shaft.

Furthermore, the elastic adjustment means ensure that there is a constant connection force between the elements of the tool-holder device, which prevents the formation of play that can trigger vibrations or loosening.

According to a variant, the thrust means each comprise a movable ball and an adjustment screw, inserted into mating seatings made on the external periphery of a relative annular element mounted on the main body.

The elastic thrust means also comprise elastic members associated with the seating, and able to cooperate with the movable ball and the adjustment screw, in order to exert the radial thrust on the coordinated surface of the main body.

According to a variant, the elastically yielding surface is made in the seating.

According to another variant, the elastically yielding surface is associated with springs, for example cup springs, disposed in the seating.

According to another variant, there are three elastic adjustment means and they are distributed at 120° on the circumference of the main body.

According to another variant, the elastically yielding surface extends on a substantial part of the segment of drive shaft disposed inside the device.

According to another variant, the main body comprises a conical surface for coupling with the tool. The surface is advantageously conformed so as to allow a precise coupling of the tool and the tool-holder device, substantially eliminating possible play, and guaranteeing the repeatability of positioning of the tool with respect to the tool-holder device.

According to another variant, the main body is associated, on the opposite side with respect to the position of the tool, with a circular covering flange. The flange has at least a housing groove for balancing elements, such as small masses or suchlike, the angular position of which can be modified so as guarantee the constant balancing of the whole tool-holder device.

According to another variant, the clamping means comprise a plurality of actuator members mounted mobile on the main body, commanded simultaneously and able to cooperate with the tool, so as to define the attachment thereof to the main body.

The actuator members are selectively movable in simultaneous manner between a first positioning condition, in which they protrude from the support plane of the main body and keep the tool in a condition separate from the main body, and a second attachment condition in which they are retracted toward the main body with respect to the support plane and keep the tool perfectly adherent to at least said support plane.

In this way, the correct positioning of the tool on the support plane is guaranteed, with no risk of distorting the possible centering and planarity adjustments made. Furthermore, in the case of hubs or conical surfaces on which the tool is mounted, the simultaneous nature of the movement limits to a minimum the possibility of the tool jamming.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a partly sectioned lateral view of the tool-holder device according to the invention;
- fig. 2 is a partly sectioned plane view of the tool-holder device in fig. 1;

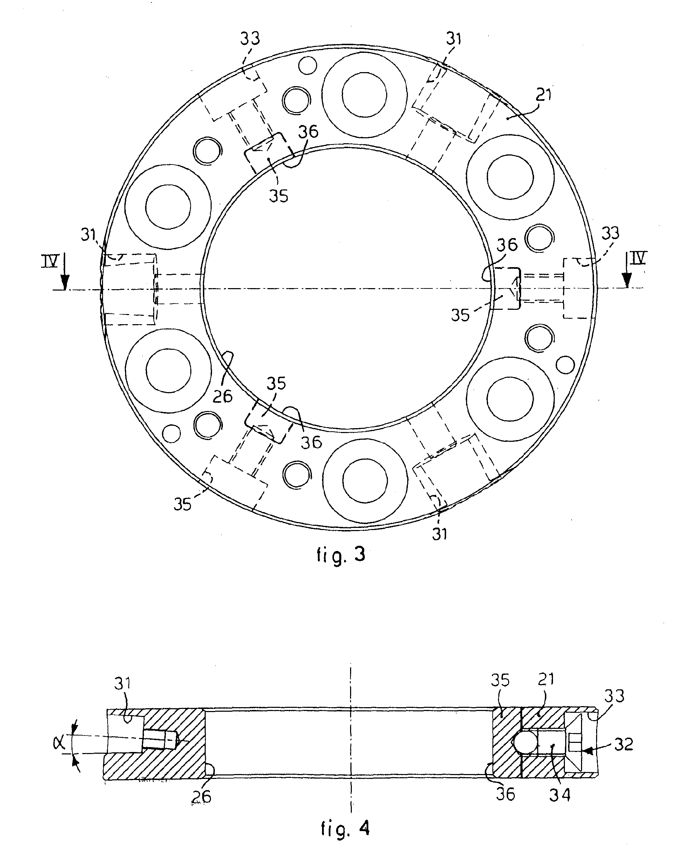

- fig. 3 is a plane view of a first component of the tool-holder device in fig. 1;
- fig. 4 is a section from IV to IV of fig. 3;
- fig. 5 is a plane view of a second component of the tool-holder device in fig. 1;
- fig. 6 is a section from V to V of fig 5;
- fig. 7 is a plane view of a third component of the tool-holder device in fig. 1;
- fig. 8 is a section from VII to VII of fig. 7;
- fig. 9 is a plane view of a fourth component of the tool-holder device in fig. 1;
- fig. 10 is a section from IX to IX of fig. 9;
- fig. 11 is a three-dimensional view of a variant of the tool-holder device in fig. 1;
- fig. 12 is an exploded view of the tool-holder device in fig. 11;
- fig. 13 is an enlarged detail of the tool-holder device in fig. 11, in a first operating condition;
- fig. 14 is an enlarged detail of the tool-holder device in fig. 11, in a second operating condition;
- fig. 15 is a partial three-dimensional view of the tool-holder device in fig. 11.

### DETAILED DESCRIPTION OF A PREFERENTIAL FORM OF EMBODIMENT

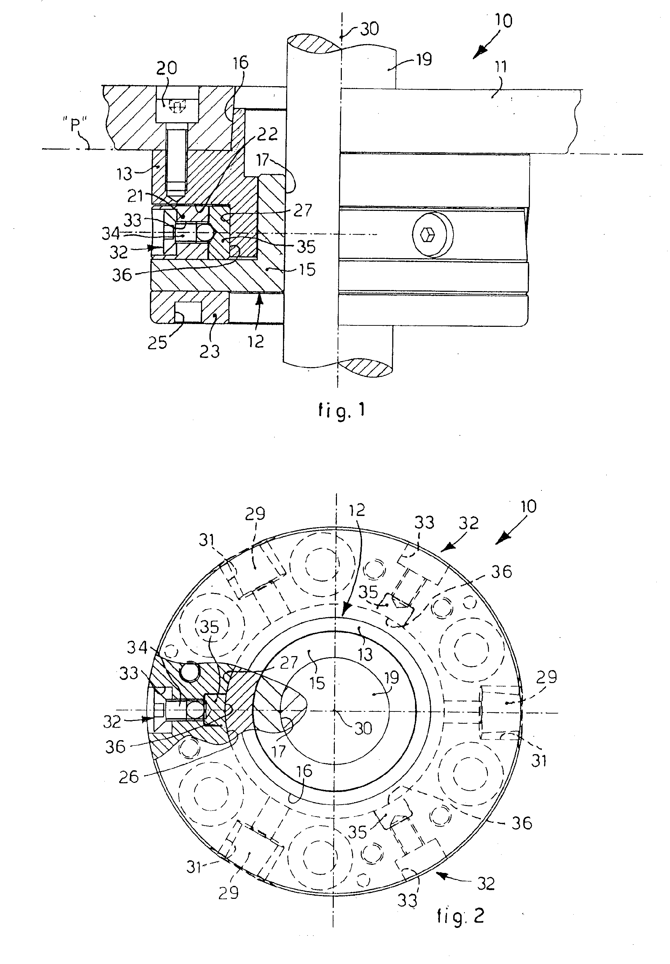

With reference to the attached drawings, and in particular figs. 1 and 2, a tool-holder device is denoted generally by the reference number 10, and is used to support and make a circular tool 11, such as a toothed cutter or suchlike, only partly shown in fig. 1, rotate according to an axis 30.

The tool-holder device 10 comprises a main body 12, in this case made in two parts, respectively a first part 13 and a second part 15, coaxially coupled with each other due to same shape coupling and reciprocally attached by means of screws, not shown, to define substantially a single element.

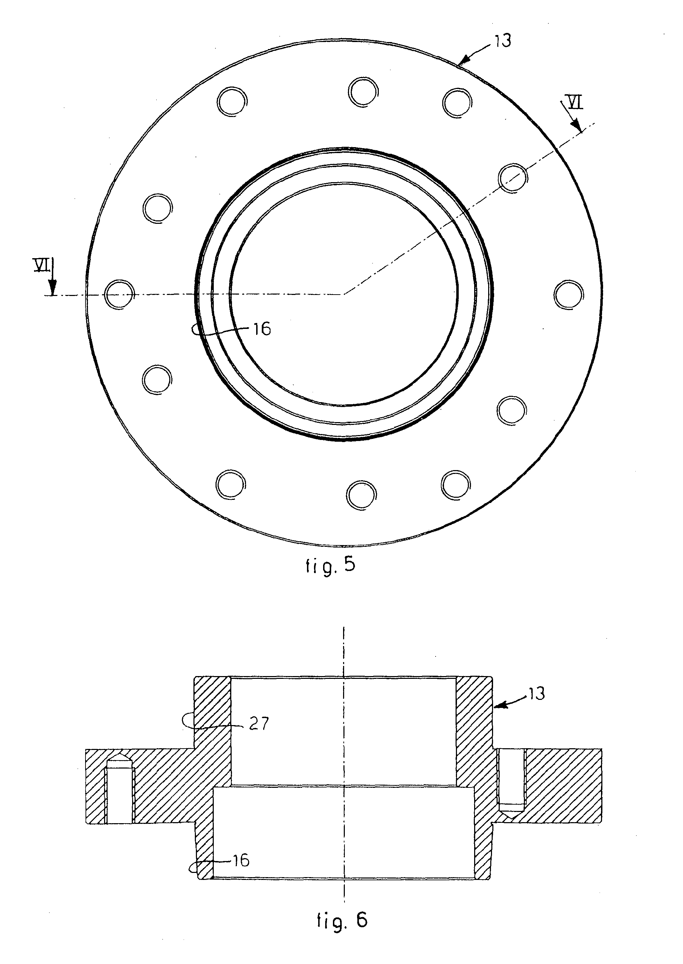

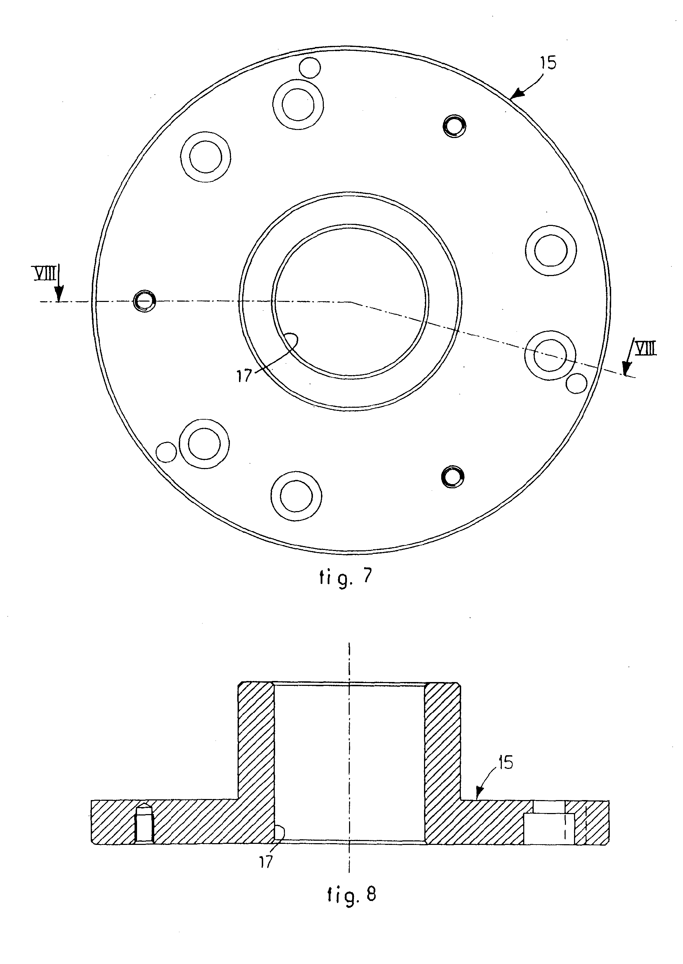

In particular, the first part 13 (figs. 5 and 6) comprises a support plane "P" on which the circular tool 11 is rested, a coupling shoulder 16 on which the circular tool 11 is keyed and clamped, whereas the second part 15 (figs. 7 and 8) defines an axial hole 17 in which a drive shaft 19 is inserted and clamped.

According to a variant, not shown here, the main body 12 is made as a single element provided both with the coupling shoulder 16, and with the axial hole 17 and also with the support plane "P".

In the embodiment shown here, the coupling shoulder 16 has a certain taper, so as to define a conical coupling between the main body 12 and the circular tool 11.

The taper allows to reduce, if not eliminate, the coupling play between the device 10 and the tool 11, allowing an optimum repeatability of the positioning of the tool 11.

Applicant has found that the taper provided for the coupling shoulder 16 is comprised in a range of values from about 1:5 to about 1:15, advantageously about 1:10.

In this case, the circular tool 11 is clamped directly on the first part 13 by a plurality of attachment screws 20.

According to a variant, the circular tool 11 is clamped to the main body 12 not directly, but by means of an annular support element, not shown.

In this case, the main body 12 also comprises an annular adjustment element 21 disposed in a coordinated circular seating 22 defined by the coupling of the first part 13 and the second part 15.

In particular, the annular adjustment element 21 comprises an internal circular surface 26, able to contact a corresponding support surface 27 of the first part 13.

The annular adjustment element 21 comprises three conical blocks 29, or wedges, inserted into mating seats 31made on the external periphery of the main body 12, and able to allow the selective adjustment of the position of the support plane P for the tool 11.

The conical blocks 29 in this case are distributed at 120° on the circumference of the main body 12, and are operatively associated with respective cup springs, so that each time we act in a radial direction on the adjustment screws, to modify the position of the support plane P for the tool 11 with respect to the axis of rotation 30, the elastic, not rigid connection of the main body 12 and the second part 15 allows to adapt to the new position without needing to act and operate on the attachment screws 19.

The annular adjustment element 21 also comprises three adjustment elements 32, in this case each provided with a thrust unit 34 consisting in this case of a movable ball and an adjustment screw, inserted into mating seatings 33 made on the external periphery of the main body 12.

The three adjustment elements 32 are distributed at 120° on the circumference of the main body 12, in alternate positions with respect to the conical blocks 29.

Each seating 33 has a yielding terminal part 35, made in a piece from the annular adjustment element 21 and elastically constrained to the latter. The terminal part 35 comprises externally a thrust surface 36, able to contact the support surface 27 of the first part 13.

The terminal part 35 is able to be thrust from the inside toward the outside against the support surface 27 by the relative adjustment element 32.

The selective and variable thrust effected with each adjustment element 32 allows to selectively adjust, also micrometrically, the reciprocal position of the axis of rotation 30 of the drive shaft 19 and the axis of rotation of the circular tool 11.

The conformation of each thrust surface 36, and its cooperation with the first part 13 and, indirectly, with the second part 15, determines a thrusting action on the drive shaft 19 for the whole contact zone with the axial hole 17.

This allows to carry out all the adjustment operations directly in the machine, keeping both the main body 12 and the covering flange 23 in their place, and without removing any other protection element present.

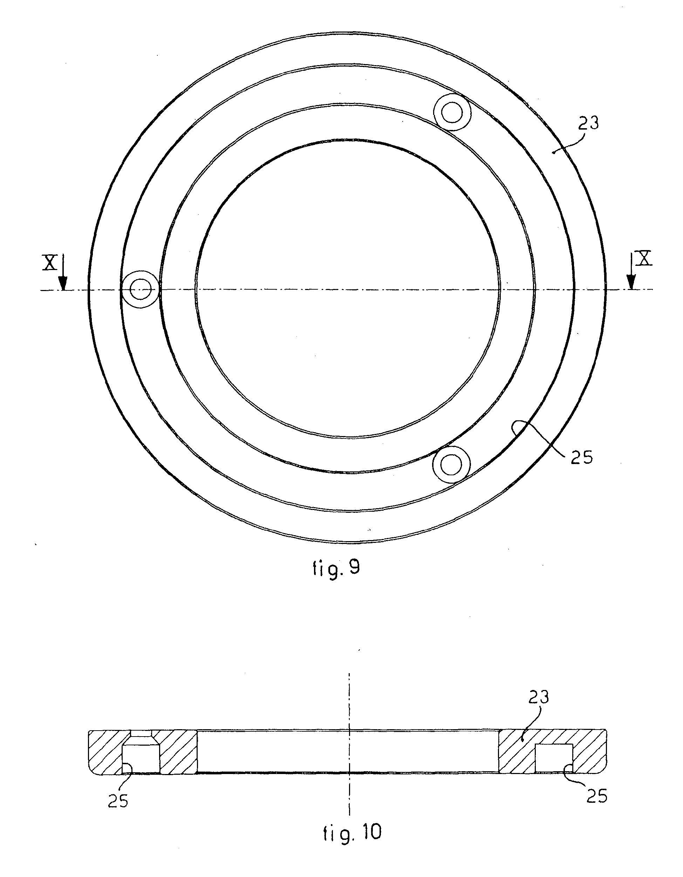

On the opposite side with respect to the tool 11 there is a circular covering flange 23 (figs. 9 and 10), attached to the second part of the main body 12 by screws.

The covering flange 23 not only protects the holes in the main body 12 where the screws 19 are inserted from the infiltration of dust, oil or other dirt, but also has the function of housing a plurality of masses, displaceable angularly so as to balance the weight of the whole tool unit. In particular, on the external surface of the flange 23 there is a groove 25, concentric with the axis of the flange 23 and able to house small masses that can be moved and clamped in a defined angular position.

According to a variant, not shown, in order to facilitate the balancing operations, in a position adjacent to the groove 25 there is a graduated scale which allows the operator to position the individual masses angularly with precision, until the required balance is obtained.

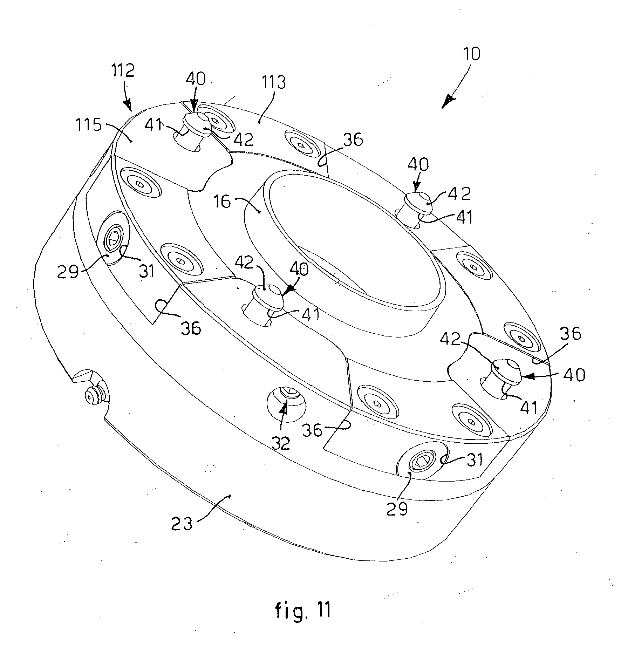

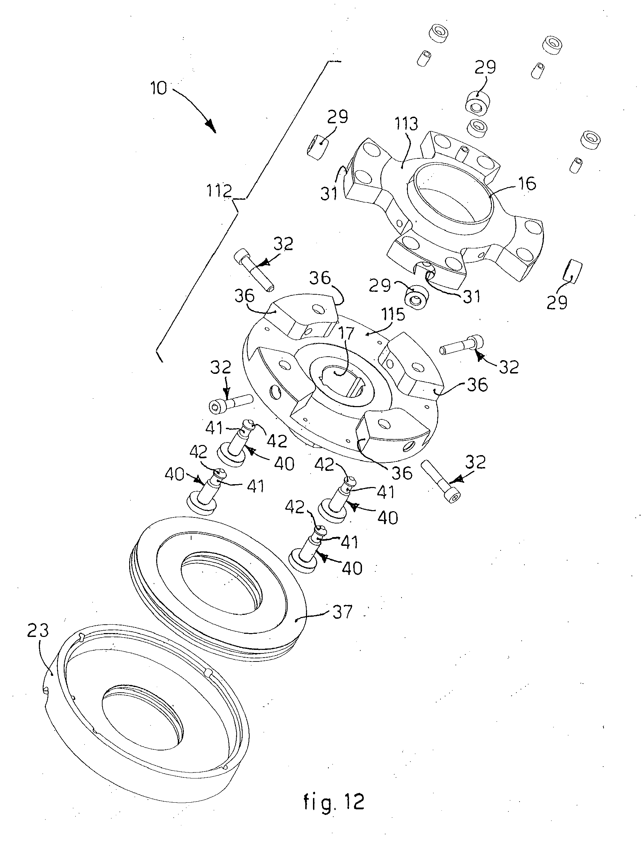

With reference to the form of embodiment shown in figs. 11 to 15, in which the same parts are indicated with the same reference numbers, the main body, in this case indicated by the reference number 112, is made as two parts, respectively a first 113 and a second 115.

The first part 113 and the second part 115 are coupled coaxially with each other.

In particular, the first part 113 is conformed substantially as a cross, while the second part 115 comprises coordinated positioning seatings 36, in which the arms of the first part 113 are housed. When assembled, the first part 113 and the second part 115 define the support plane P for the circular tool 11.

In this case, the conical blocks 29 and the mating seats 31 are mounted and made on the main body 112 while the adjustment elements 32 are made on the second part 115.

The covering flange 123 is hollow internally and inside it a movement ring 37 is mounted, axially mobile. The movement ring 37 defines a sealed pneumatic chamber with the covering flange 123.

In this form of embodiment, four actuator blocks 40 are provided, driven pneumatically, disposed substantially parallel to the axis of rotation 30, passing through the second part 115 and constrained with one end to the movement ring 37.

The other end of each actuator block 40 comprises a constraining groove 41 and a rounded terminal 42, which normally protrude from the second part 115 with respect to the support plane P.

In this embodiment, corresponding constraining eyelets 45 are made on the circular tool 11, conformed with a variable width to allow a bayonet type attachment with respect to the constraining groove 41 and rounded terminal 42 of each actuator block 40.

Each actuator block 40 is mechanically associated with a respective elastic element, in this case cup springs 43, which tends to normally keep the relative actuator block 40 in a retracted condition, that is, prevalently inside the first part 115.

With this solution therefore, by introducing pressurized air inside the sealed pneumatic chamber 39, so as to overcome the action of the cup springs 43, we determine the movement of the movement ring 37 with a consequent simultaneous movement of the actuator blocks 40.

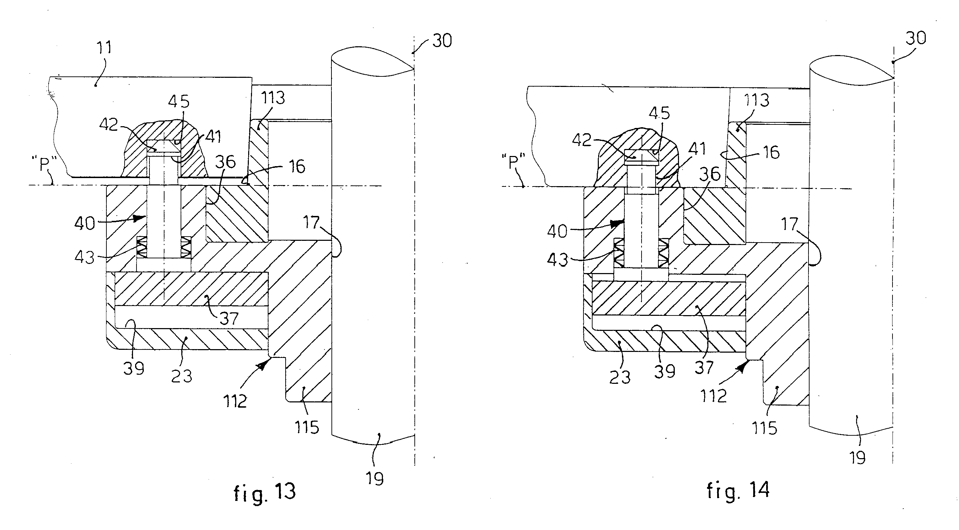

The actuator blocks 40 are in fact selectively movable in a direction substantially parallel to the axis of rotation 30 between a first positioning condition (fig. 13), and a second attachment condition (fig. 14).

In the first positioning condition, the actuator blocks 40 protrude from the support plane P of the main body 112 and allow bayonet type attachment with the circular tool 11. In this condition, the actuator blocks 40 protrude in such a manner as to keep the circular tool 11 in proximity with, but separate from, the support plane P and also the coupling shoulder 16.

In the second attachment condition, the actuator blocks 40, due to the effect of the action of the cup springs 43, simultaneously retreat toward the main body 112, taking the circular tool 11, with a movement substantially parallel to the axis of rotation 30, to rest on the support plane P.

In particular, starting from a condition of proximity to, but separate from, the support plane P and the coupling shoulder 16, the circular tool 11 is taken to adhere perfectly both to the support plane P and also to the coupling shoulder 16, guaranteeing that the adjustment made with the conical blocks 29 and the adjustment element 32 are respected.

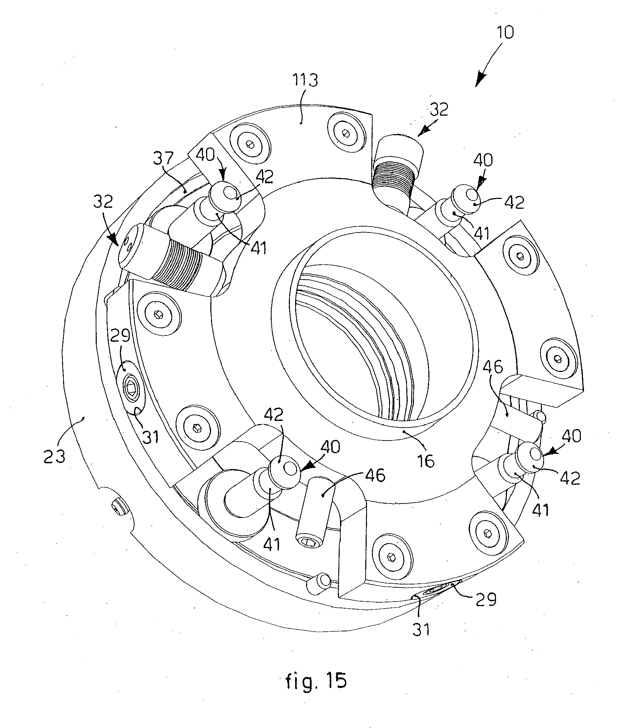

In fig. 15, the second part 115 has been removed, to show how a clamping screw 46 is diametrically opposed to every adjustment element 32; the screw 46 allows, once the desired position of the first part 113 has been reached, to clamp the latter, so as to prevent accidental movements thereof.

It is clear, however, that modifications and/or additions of parts may be made to the tool-holder device 10 as described heretofore, without departing from the field and scope of the present invention.

For example, it comes within the field of the present invention to provide that, instead of the terminal part 35 elastically constrained to the annular element 21, elastic thrust elements are provided such as cup springs, foil springs, leaf springs, helical springs, or others suitable for the purpose.

It also comes within the field of the present invention to provide that the main body 12 does not have the annular adjustment element 21. In this solution, the conical blocks 29 and the adjustment elements 32 are provided directly on the first part 13, or on the second part 15 of the main body 12.

It is also clear that, although the present invention has been described with reference to some specific examples, a person of skill in the art shall certainly be able to achieve many other equivalent forms of tool-holder device, having the characteristics as set forth in the claims and hence all coming within the field of protection defined thereby.

## Claims

1. Tool-holder device able to couple a tool (11) to a shaft (19) of a motor, comprising a main body (12, 112) defining a support plane (P) on which said tool (11) is able to be positioned, and a plurality of clamping means (20, 40) which attach said tool (11) to said main body (12, 112), **characterized in that** said main body (12, 112) comprises a plurality of elastic adjustment means (32) distributed in a substantially equidistant manner on the circumference of said main body (12, 112), and able to be actuated radially in a direction substantially orthogonal to an axis of rotation (30) of said shaft (19).

2. Tool-holder device as in claim 1, **characterized in that** said elastic adjustment means (32) comprise thrust means (34) able to act on a coordinated elastically yielding surface (35) made on said main body (12, 112).

3. Tool-holder device as in claim 1 or 2, **characterized in that** said main body (12, 112) also comprises cuneiform means (29) able to be displaced radially so as to act on a mating inclined surface of a relative seat (31) made on said main body (12, 112), in order to adjust the position of said support plane (P) for said tool (11) with respect to said axis of rotation (30).

4. Tool-holder device as in claim 2, **characterized in that** said thrust means (34) comprise a movable ball and an adjustment screw, inserted into mating seatings (33) made on the external periphery of a relative annular element (21) mounted on said main body (12, 112).

5. Tool-holder device as in claim 4, **characterized in that** said elastically yielding surface (35) is made in said seating (33).

6. Tool-holder device as in claim 5, **characterized in that** said elastically yielding surface (35) comprises externally a thrust surface (36) able to contact a coordinated surface (27) of said main body (12, 112).

7. Tool-holder device as in claim 4, **characterized in that** said elastically yielding surface (35) is associated with one or more springs disposed in said seating (33).

8. Tool-holder device as in any claim hereinbefore, **characterized in that** there are three of said elastic adjustment means (32) distributed at 120° on the circumference of said main body (12, 112).

9. Tool-holder device as in any claim hereinbefore, **characterized in that** said main body (12, 112) comprises at least a conical coupling surface (16) to couple with said tool (11).

10. Tool-holder device as in any claim hereinbefore, **characterized in that** said clamping means comprise a plurality of actuator members (40) mounted mobile on said main body (112), commanded simultaneously by a common movement member (37), and able to cooperate with said tool (11) to define the attachment thereof to said main body (112).

11. Tool-holder device as in claim 10, **characterized in that** said actuator members (40) are selectively movable simultaneously between a first positioning condition, in which they protrude from said support plane (P) of said main body (112), and keep said tool (11) in a condition separate from said main body (112), and a second attachment condition in which they are retracted toward said main body (112) with respect to the support plane (P) and keep said tool (11) adherent at least to said support plane (P).

12. Tool-holder device as in claim 11, **characterized in that** said actuator members (40) are mechanically associated with relative elastic elements (43) able to keep them normally in said second attachment condition.

13. Tool-holder device as in claim 11 or 12, **characterized in that** said actuator members (40) are driven pneumatically.

14. Tool-holder device as in any claim from 11 to 13, **characterized in that** said main body (112) comprises a first part (113) and a second part (115) coaxially coupled with each other, wherein said first part (113) is conformed substantially as a cross and said second part (115) comprises coordinated positioning seatings (36) in which respective arms of said first part (113) are housed.

15. Tool-holder device as in claim 14, **characterized in that** said elastic adjustment means (32) are mounted on said second part (115) and are able to act against said first part (113), and **in that** it comprises clamping members (46) mounted on said second part (115) in a position diametrically opposite said elastic adjustment means (32).
